# EUROPÄISCHE PATENTSCHRIFT

(11) **EP 1 154 548 B1**
(45) Veröffentlichungstag und Bekanntmachung des Hinweises auf die Patenterteilung: **26.11.2003**
(21) Anmeldenummer: 01111038.4
(22) Anmeldetag: 08.05.2001
(51) Int. Cl.: H02K 9/16, H02K 5/20

(54) **Ständer mit Kühlrohren für eine elektrische Maschine sowie Verfahren zu dessen Herstellung**
Stator with cooling tubes for an electrical machine and its production method
Stator avec tubes de refroidissement pour une machine électrique et méthode de sa fabrication

(30) Priorität: 08.05.2000 DE 10022146
(43) Veröffentlichungstag der Anmeldung: 14.11.2001
(73) Patentinhaber: BAUMÜLLER NÜRNBERG GMBH, D-90482 Nürnberg (DE)
(72) Erfinder: Wehner, Hans-Jürgen Dr., 91338 Igensdorf (DE); Meister, Rudolf, 90596 Schwanstetten (DE)
(74) Vertreter: Götz, Georg

(56) Entgegenhaltungen:
- EP-A- 0 729 215
- DE-A- 19 627 029
- DE-U- 29 606 474
- US-A- 4 516 044
- US-A- 5 859 482
- PATENT ABSTRACTS OF JAPAN vol. 1995, no. 2, 31. März 1995 (1995-03-31) -& JP 06 327180 A (TOSHIBA CORP), 25. November 1994 (1994-11-25)

## Beschreibung

Die Erfindung betrifft einen gekühlten Ständer für eine elektrische Maschine, insbesondere einen Drehstrommotor mit rotierendem Innenläufer, gemäß Oberbegriff des Anspruchs 1 (vgl. DE-A-197 57 605). Ferner betrifft die Erfindung ein Verfahren zur Herstellung eines solchen Ständers.

Bei einem bekannten Ständer für Elektromotoren (EP 0 342 554 A1) sind Kühlkanäle für ein flüssiges Kühlmittel vorgesehen. Der Läufer ist als Außenläufer ausgebildet, und der Ständer weist in seinem mittleren Bereich einen Ständerfuß aus massivem, ungeblechten Material auf, worauf geblechte Polzähne aufgeschoben sind. Zur Kühlung des Ständers wird vorgeschlagen, U-förmig gebogene Rohre in das Material des zentralen, massiven Statorfußes einzugießen (vgl. Spalte 3, Zeile 37-41 und Spalte 6, Zeile 20, 21 der genannten Fundstelle). Für das Eingießen ist allerdings im Statorfuß eine entsprechende U-Form auszubilden, was aufgrund der massiven Struktur des Statorfußes produktionstechnisch aufwendig und schwierig ist.

Aus DE-U-91 07 197 ist für eine elektrische Maschine ein Gehäuse bekannt, dessen Wandung aus Grauguß hergestellt ist. Zur Kühlung ist in der Gehäusewand eine wendelförmige Rohrschlange für Kühlflüssigkeit angeordnet. Aus DE-A-196 51 959 ist ein Ständergehäuse bekannt, das aus Aluminium gegossen wird. Beim Gießen dieses Gehäuses wird neben wenigstens einer Kühlrohrschlange 3 gleichzeitig ein vormontiertes Ständerblechpaket mit eingegossen.

Aus EP-A-0 424 867 sind bei einem Antriebsmotor der Motorkühlung dienende, achsparallel über den Umfang des Motorgehäuses verteilt angeordnete Kühlkanäle bekannt. Sie sind in einem zylindrischen Profilmantel untergebracht, der das Motorgehäuse umschließt. Als Material für den Profilmantel wird Aluminium vorgeschlagen, und zur Herstellung das Stranggußverfahren (vgl. dort Spalte 2, Zeile 40-Spalte 3, Zeile 33). Zur Vereinfachung des Zusammenbaus wird eine mehrstückige Ausführung des Profilmantels aus mehreren Segmenten beschrieben. So kann ein Profilmantelsegment als Quadrant oder Drittelkreis ausgestaltet sein, und die einzelnen Segmente lassen sich jeweils über Flanschstücke 26 und Gegenstücke 27 mit Schrauben und Muttern miteinander verbinden.

In EP-A-0 729 215 ist eine elektrische Maschine mit einer Kühlvorrichtung beschrieben. Es wird ein zylindrisches Rohr als Maschinengehäuse verwendet, worin die Motorteile wie Stator und Rotor untergebracht sind. Auf den Außenmantel des Maschinengehäuses sind um dessen Umfang herum mehrere Profilteile befestigt, die rohrförmige Kühlkanäle enthalten und als Strangprofile ausgebildet sein können. Es wird die Zielsetzung angegeben, einen guten Wärmeübergang zwischen dem Maschinengehäuse und den Profilteilen sicherzustellen. Dazu sind die Profilteile auf ihrer Befestigungsseite (am Maschinengehäuse) mit einer ebenen, geradlinigen Auflagefläche gestaltet, mit der sie an am Maschinengehäuse bzw. dessen Außenmantel ausgebildeten, tangential verlaufenden, ebenen Planflächen aufliegend angeordnet sind. Durch diese Art der Anbringung der Kühlrohr-Profrlteile am Außenumfang des Maschinengehäuses soll eine vollständige Trennung des Kühlkreises von den elektrischen Maschinenkomponenten und ein Eindringen von Kühlmittel in diese verhindert sowie zudem eine leichte Austauschbarkeit der einzelnen Profilteile bzw. Kühlelemente erreicht werden.

Auch nach DE-A-196 27 029 ist bei einer elektrischen Maschine das aus aufeinandergeschichteten Blechlamellen bestehende Ständerblechpaket in einem besonderen, vollumfänglich zylindrischen Ständergehäuse aufgenommen, in das eine mäanderförmige Kühlrohrschlange eingegossen ist. Allerdings erstrecken sich die achsparallel verlaufenden Rohrabschnitte der Kühlrohrschlange ausschließlich in den Eckbereichen des mehreckig ausgebildeten Ständergehäuses. Lediglich an einer der Stimseiten des Ständergehäuses erstrecken sich Verbindungsabschnitte der Kühlrohrschlange entlang einer zwischen zwei Eckbereichen gelegenen Seite des Ständergehäuses.

In DE-C-197 42 255 ist eine gehäuselose Drehstrommaschine mit achsparallelen Kühlmittelrohren in den Eckbereichen eines Ständerblechpakets beschrieben. Die Kühlmittelrohre sind auf der A- und B-Seite miteinander mittels Eckverbindungsbögen 16 verbunden. Die Ständerbleche 1 sind Ober Preßrahmen 7 verspannt.

In DE-A-197 57 605 ist ein ebenfalls gehäuseloser, gekühlter Elektromotor mit rechteckiger Statorblechkontur offenbart. In den Eckbereichen sind axiale Luftdurchtrittsöffnungen 3 vorhanden. Diese weisen zumindest teilweise eingegossene, kreisförmige Kühlkanäle 6 mit angegossenen Endstutzen 7 auf. Zur Bildung der Kühlkanäle werden in bereits bestehende Kühlmitteldurchtrittsöffnungen 3 des Ständerblechpakets 1 wiederverwendbare Montagedome eingesetzt und Zwischenräume vergossen. Allerdings ist pro zu gießender Kühlkanal ein Montagedom in die jeweilige Blechpaket-Durchtrittsöffnung einzustecken und wieder herauszuziehen. Zudem werden während des Gießvorgangs an die Kühlkanäle 6 Endstutzen 7 für Kühlmitteleinlaß und-auslaß angegossen, worauf Umlenkelemente zu stecken sind. Dies alles führt zu einer Handhabung während Herstellung und Montage, welche einen verhältnismäßig großen Aufwand an Zeit, Handgriffen, Geschicklichkeit und Werkzeug erfordert.

Es ergibt sich die der Erfindung zugrunde liegende Aufgabe, bei einem Ständer für elektrische Maschinen den Vorgang der Kühlkanalbildung mittels Vergießen mit weniger Handgriffen und weniger Zeitaufwand durchführen zu können. Insbesondere soll die Gestaltung des Ständer-Blechpakets vereinfacht und die Montage des Kühlkanalsystems beschleunigt werden.

Zur Lösung wird der im Patentanspruch 1 angegebene Ständer für eine elektrische Maschine vorgeschlagen. Vorteilhafte Weiterbildungen ergeben sich aus den abhängigen Ansprüchen.

Indem erfindungsgemäß im Gußkörper mehrere nebeneinander, insbesondere parallel verlaufende Kühlrohrabschnitte einer Kühlrohrschlange zusammengefaßt sind, läßt sich eine erheblich effizientere, vor allem schnellere Montage des Kühlsystems durchführen. Mit der raschen Anbringung von maximal zwei Gußkörpern läßt sich eine effektive Kühlung für dle elektrische Maschine bewerkstelligen, wobei die Ausbildung des jeweiligen Kühlkanals in den maximal zwei Gußkörpern wenige Handgriffe erfordert oder sich auch automatisieren läßt. Die Notwendigkeit, für einen jeden einzelnen Kühlkanalabschnitt einen besonderen bzw. eigenständigen Gießschritt vorzusehen, entfällt.

Gemäß Erfindung wird die Anordnung bzw. das Eingießen einer Kühlrohrschlange vorgesehen, wobei deren mehrere Kühlrohrabschnitte In den jeweiligen, durch Vergießen wärmeleitenden Materials gebildeten Gußkörper eingebettet werden, der am Blechpaket anliegt und/oder von diesem umfaßt ist. Vorzugsweise wird als Gießmaterial zur Bildung des Gußkörpers Aluminium oder Zink oder eine Legierung mit Aluminium und/oder Zink verwendet. Erfindungsgemäß werden also, im Blechpaket des Ständers zwei Aufnahmehohlräume oder dergleichen angefertigt jeweils ein vorgefertigtes, zweckmäßig vorgebogenes Kühlrohr in den Aufnahmehohlraum gelegt und dieser dann jeweils mit Aluminium aufgefüllt, Damit läßt sich auch der Vorteil einer besonders flachen bzw. schmalen Bauweise des Ständers bzw. des entsprechenden Elektromotors erzielen. Denn mit der erfindungsgemäßen Anordnung lassen sich zwei Kühlrohr-Blöcke oder -module in Form der Gußkörper platzsparend im Ständer unter- bzw. anbringen.

Der schmalen oder flachen, kompakten Bauform dient es, wenn ein ohne Gehäuse lediglich aus einem Blechpaket gebildeter Ständer, der einen rechteckigen oder quadratischen Grundquerschnitt besitzt, mit zwei Gußkörpern (jeweils mit einer Kühlrohrschlange) in parallele Seiten des Blechpakets und diametral gegenüberliegend angeordnet oder eingelassen sind. Damit können die Abmessungen von den parallelen bzw. gegenüberliegenden Seiten des Blechpaket-Ständers, die nicht mit Kühlrohr-Gußkörpem versehen sind, kleingehalten werden.

Eine schmale, kompakte Bauform für den Ständer wird ferner durch eine Ausbildung der Erfindung gefördert, nach der im Gußkörper ein Kühlrohr in einer Ebene oder auch längs einer gekrümmten Fläche verläuft. Mit dem nur zweidimensionalen Verlauf wird der Vorteil erzielt, dass der Gußkörper selbst mit einer flachen, quader- und/oder nierenartigen Gestalt gebildet werden kann. Um eine intensive Kühlung des Gußkörpers und damit des Ständer-Blechpakets zu erzielen, verläuft gemäß Erfindung das Kühlrohr im Gußkörper mäanderförmig vorzugsweise in einer Ebene). Dadurch läßt sich eine dichte beziehungsweise engmaschige Durchsetzung des Gußkörpers mit Kühlmittel erreichen.

Im Rahmen der Erfindung sind mehrere Gußkörper voneinander separat gebildet und/oder getrennt und/oder mit Abstand in Umfangsrichtung angeordnet.

Weil im Gußkörper die Kühlrohrschlange mit mäanderartigem Verlauf eingelegt bzw. gegossen sind, liegt es im Rahmen der Erfindung, dass die mehreren Kühlkanalabschnitte der Kühlrohrschlange im Querschnitt gesehen zumindest teilweise nebeneinander verlaufen.

Im Rahmen der allgemeinen erfinderischen Idee wird zur Lösung der eingangs genannten Erfindungsaufgabe auch das im Patentanspruch 1 angegebene Herstellungsverfahren für einen Ständer vorgeschlagen.

Dabei kann nach einer Erfindungsausbildung der Gußkörper mit einer an der Innenseite konkav gewölbten Form, insbesondere einer nierenartigen Form gestaltet sein. Damit wird der Vorteil einer Anpassung der Kühlsystemstruktur an die rotationssymmetrische Struktur der elektrischen Maschine und damit eine verbesserte, effektive Kühlung erzielt.

Weitere Einzelheiten, Merkmale, Vorteile und Wirkungen auf der Basis der Erfindung ergeben sich aus der nachfolgenden Beschreibung eines bevorzugten Ausführungsbeispiels der Erfindung sowie aus den Zeichnungen. Diese zeigen in:
- Figur 1: einen ersten Drehstrommotor-Ständer im axialen Längsschnitt gemäß Linie I-I in Figur 2,
- Figur 2: eine teilweise querschnittlich geschnittene Stirnansicht gemäß II-II in Figur 1,
- Figur 3: eine Ansicht auf die gegenüber Figur 2 entgegengesetzte Stirnseite gemäß Richtung III in Figur 1, und
- Figur 4: einen axialen Längsschnitt gemäß IV-IV in Figur 2.

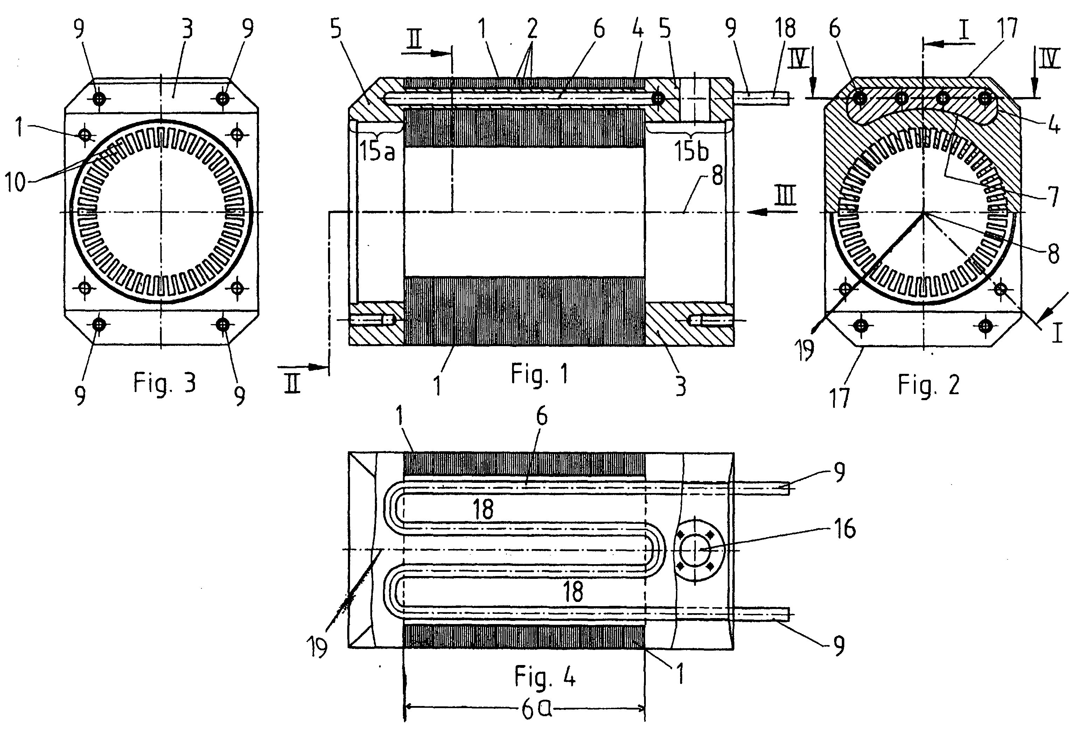

Gemäß Figuren 1-4 ist der für einen Drehstrommotor vorgesehene Ständer in an sich bekannter Weise aus einem Elektro-Blechpaket 1 gebildet, Indem eine Vielzahl gegeneinander isolierter Blechlamellen deckungsgleich aufeinander gelegt sind. Auf zwei parallelen Seiten des mit quadratischer Grundform gestalteten Blechpakets 1 sind jeweils in peripherer Lage Aluminium-Gußkörper 3 blockartig angegossen. Sie durchsetzen jeweils einen Hohlraum 4, welcher in peripherer Lage das Blechpaket 1 achsparallel durchsetzt und jeweils zwei stimseitige Vorsprünge 5 des Gußkörpers 3 verbindet. Innerhalb des Alu-Blocks bzw. Alu-Gußkörpers 3 verläuft eine Kühlrohrschlange 6 längs einer achsparallelen Ebene 18 mit mäanderartigem Verlauf. Dadurch läßt sich der Gußkörper 3 mit vergrößerter Dichte von Kühlmittel durchsetzen, was die Kühlwirkung erhöht. Diesem Zweck dient auch der gemäß Figur 2 nieren- bzw. bohnenartige Querschnitt des Alu-Gußkörpers 3, wobei die konkave Seite 7 nach innen der Läufer-Drehachse 8 zugewandt ist. Die Kühlrohrenden 9 stehen an der in Figur 3 dargestellten Ständer-Stirnseite (siehe dort auch die Ständer-Wicklungsnuten 10) achsparallel vor.

Eine Herstellungsmethode, mit der sich rationell und platzsparend der Kühl-Gußkörper mit mäanderförmiger Kühlrohrschlange 6 im Ständer-Blechpaket 1 unterbringen läßt, ist wie folgt: Zunächst wird das Blechpaket in an sich bekannter Weise vorgefertigt, wobei im Sinne der Erfindung noch zusätzlich beim Ausstanzen der einzelnen Blechlamellen Aussparungen mit ausgestanzt werden, welche beim deckungsgleichen Übereinanderschichten der Lamellen Platz bzw. einen Aufnahmehohlraum für den später einzugießenden Alu-Gußkörper 3 ergeben. Dies kann vorteilhaft während des Ausstanzens jeder einzelnen Blechlamelle erfolgen. In einem nächsten Schritt ist dann das Blechpaket in eine ausgebildete Gießform einzulegen. In einem nächsten Schritt werden vorgefertigte bzw. vorgebogene Kühlschlangen 6 ebenfalls in die Gießform und darin innerhalb des- speziell ausgesparten Aufnahmehohlraums 4 eingelegt. Sodann wird fließfähiges, wärmeleitendes Material, vorzugsweise Aluminium, in die Gießform derart eingegossen, dass sich die in Figuren 1-4, insbesondere Figur 2, ersichtliche Konfiguration mit den stimseitig angesetzten Vorsprüngen 5 ergibt. Diese lassen sich durch komplementäre Gestaltung der (nicht gezeichneten) Gießform bilden. Nach Erkalten des eingegbssenen Aluminiums ist die Kühlrohrschlange 6 in Wärmeverbindung mit dem Blechpaket 1 in der achsparallelen Ebene 18 fixiert. Es liegt auch im Rahmen der Erfindung, die Kühlrohrschlange 6 längs einer gekrümmten Fläche, beispielsweise konkav um die Innenläuferachse gewölbt, verlaufen zu lassen.

Gemäß Figuren 1 und 4 sind die Alu-Cußkörper auf einer oder auf zwei parallelen Blechpaket-Seiten mit stimseitigen Überständen 15a, 15b zweckmäßig unterschiedlicher Größe versehen. Der größere bzw. längere Überstand 15b besetzt einen Querdurchbruch 16 und kann somit die zusätzliche Funktion eines Befestigungsflansches ausfüllen. Um Platz für den Querdurchbruch 16 und Bildung eines Befestigungsflansches zu schaffen, sind die beiden mittleren Abschnitte der Kühlrohrschlange 6 in achsparalleler Richtung entsprechend verkürzt gestaltet.

Gemäß Figuren 2 und 4 ist in dem Gußkörper 3 die Kühlrohrschlange 6 mit parallel nebeneinander verlaufenden Rohrabschnitten 6a gestaltet, die zudem parallel zur Innenläuferdrehachse 19 verlaufen. Damit sind in jedem Gußkörper 3 immer mehrere nebeneinander liegende Rohrabschnitte 6a zusammengefaßt bzw. umfaßt Gemäß Figur 2 erstrecken sich die jeweiligen Gußkörper 3 soweit, dass sie von einer gedachten, um die Innenläuferachse 19 geführten Kreislinie ein Segment bzw. einen Bogenabschnitt von etwa 90 Winkelgraden abdecken. Bei der Verwendung der zwei Gußkörper ergibt sich damit zwischen beiden ein wesentlicher Abstand in Umfangsrichtung. Andererseits ist es mit dieser Anordnung ausreichend, nur zwei Kühl-Gußkörper bzw. Kühlmodule anzubringen bzw. auszubilden, was den Herstellungs- und Montageaufwand für das Kühlsystem erheblich vermindert.

### Bezugszeichenliste

- 1: Blechpaket
- 2: Lamelle
- 3: Gußkörper
- 4: Aufnahmehohlraum
- 5: Vorsprung
- 6: Kühlrohr
- 6a: parallele Rohrabsahnitte
- 7: konkave Seite
- 8: Läufer-Drehachse
- 9: Kühlrohrende
- 10: Wicklungsnut
- 15a, 15b: Überstand
- 16: Querdurchbruch
- 17: parallele Seiten
- 18: achsparallele Ebeme
- 19: Innenläuferdrehachse

## Patentansprüche

1. Gekühlter Ständer für eine elektrische Maschine mit rotierendem Innenläufer, welcher Ständer gehäuselos mit wenigstens einem Elektro-Blechpaket (1) mit parallelen Seiten (17) gebildet ist und mehrere Kühlkanäle aufweist, die in mehrere, durch Vergießen wärmeleitenden Materials jeweils einstückig gebildete Gusskörper (3) eingebettet sind, die jeweils am Blechpaket (1) anliegen und in einem Hohlraum (4) des Blechpakets (1) aufgenommen sind und dessen Inneres durchsetzen sowie nur einen Teil einer gedachten, um die Innenläuferachse (19) verlaufenden Kreislinie abdecken, **dadurch gekennzeichnet, dass** maximal zwei Gusskörper (3) vorgesehen sind, die je in einer von maximal zwei parallelen Seiten (17) des Blechpakets (1) angeordnet sind, und die maximal zwei Gusskörper (3) bezüglich der Innenläuferachse (19) einander diametral gegenüberliegend und mit wesentlichem Abstand in Richtung der Kreislinie angeordnet sind, und in jedem Gusskörper (3) eine vorgefertigte, mäanderartig mit nebeneinander liegenden Abschnitten verlaufende Kühlrohrschlange (6) als Kühlkanal eingebettet ist, wobei einzig die Kühlrohrenden (9) der Kühlrohrschlangen (6) vom Ständer vorstehen.

2. Ständer nach Anspruch 1, **dadurch gekennzeichnet, dass** der Gusskörper (3,3a) aus Aluminium oder Zink oder einer Legierung mit Aluminium und/oder Zink gegossen ist.

3. Ständer nach Anspruch 1 oder 2, **dadurch gekennzeichnet**, dasser gehäuselos gebildet ist aus dem Blechpaket (1) mit einem rechteckigen oder quadratischen Grunquerschnitt.

4. Ständer nach einem der vorangehenden Ansprüche, **dadurch gekennzeichnet, dass** im Gusskörper (3,3a) die Kühlrohrschlange (6) in einer gedachten Ebene (18) oder einem gedachten gewölbten Flächenabschnitt achsparallel zur innenläuferdrehachse (19) verläuft.

5. Ständer nach einem der vorangehenden Ansprüche **dadurch gekennzeichnet, dass** der Gusskörper (3) im Querschnitt ein Umrissprofil mit einer konkaven Wölbung auf der der Innenläuferachse (19) gegenüberliegenden Seite (7) besitzt.

6. Ständer nach einem der vorangehenden Ansprüche, **dadurch gekennzeichnet, dass** am jeweiligen Gusskörper (3) stimseitige Vorsprünge (5) durch Gießen angeformt sind.

7. Verfahren zur Herstellung eines Ständers nach einem der vorangehenden Ansprüche für eine elektrische Maschine mit rotierendem Innenläufer, welcher Ständer gehäuselos mit wenigstens einem Elektro-Blechpaket (1) mit parallelen Seiten (17) gebildet und mit mehrere Kühlkanälen versehen wird, die in mehrere, durch Vergießen wärmeleitenden Materials jeweils einstückig gebildete Gusskörper (3) eingebettet werden, **gekennzeichnet durch** folgende Schritte:
a) Stanzen einer Mehrzahl von isolierten Elektroblech-Lamellen (2) mit den parallelen Seiten (17) und mit Aussparungen (4) zur Bildung von maximal zwei Aufnahmehohlräumen für je einen Gusskörper (3) derart, dass die Aufnahmehohlräume nur einen Teil einer gedachten, um die Innenläuferachse (19) verlaufenden Kreislinie abdecken und einander diametral gegenüberliegend je in einer der parallelen Seiten (17) des Blechpakets (1) mit wesentlichem Abstand voneinander in Richtung der Kreislinie angeordnet sind;
b) Schichten eines Blechpakets (1) aus den gegeneinander isolierten Lamellen (2) mit Bildung der maximal zwei Aufnahmehohlräume über deckungsgleiches Übereinanderlegen der Aussparungen (4);
c) Einlegen des Blechpakets (1) in eine Giessform;
d) Positionieren je einer vorgefertigten, mäanderartigen Kühlrohrschlange (6) in den maximal zwei Aufnahmehohlräumen derart, dass einzig die Kühlrohrenden (9) der Kühlrohrschlangen (6) vom Ständer vorstehen;
e) Vergießen des Blechpakets (1) mit den positionierten Kühlrohrschlangen (6) mittels Gießmasse aus wärmeleitendem Material derart, dass die Kühlrohrschlangen (6) als Kühlkanäle eingebettet sind, und einzig die Kühlrohrenden (9) der Kühlrohrschlangen (6) vom Ständer vorstehen,
f) Erkalten des Verbunds aus dem oder den Kühlrohren (6) und der Gießmasse unter Entstehung des oder der Gusskörper (3) in dem oder den Aufnahmehohlräumen.

8. Verfahren nach Anspruch 7, **dadurch gekennzeichnet, dass** Schritt d) vor Schritt c) durchgeführt wird.

## Claims

1. Cooled stator for an electric machine with rotary internal rotor, the stator being housing-less with at least one electric armature core (1) with parallel sides (17) and having a plurality of cooling channels, which are embedded in a plurality of cast bodies (3), which are each formed in one piece by casting heat-conducting material and each of which abut the armature core (1) are each received in a cavity (4) in the armature core (1), penetrating its interior and covering only part of a hypothetical circle extending around the internal rotor axis (19), **characterised in that** two cast bodies (3) maximum are provided, each of which is disposed in one of two parallel sides (17) maximum of the armature core (1), and the two cast bodies (3) maximum are disposed diametrically opposite one another relative to the internal rotor axis (19) at a substantial distance in the direction of the circle, and in each cast body (3) is embedded a prefabricated, winding, serpentine cooling pipe (6) extending with adjacent sections and acting as a cooling channel, in which case only the cooling pipe ends (9) of the serpentine cooling pipes project from the stator.

2. Stator according to claim 1, **characterised in that** the cast body (3, 3a) is cast from aluminium or zinc or an alloy containing aluminium and/or zinc.

3. Stator according to claim 1 or 2, **characterised in that** it is housing-less and consists of the armature core (1) with a rectangular or square base cross-section.

4. Stator according to one of the preceding claims, **characterised in that** in the cast body (3, 3a) the serpentine cooling pipe (6) extends in a hypothetical plane (18) or a hypothetical convex surface section, axially parallel to the internal rotor axis of rotation (19).

5. Stator according to one of the preceding claims, **characterised in that** the cast body (3) has in cross-section an outline with a concave curvature on the side (7) opposite to the internal rotor axis (19).

6. Stator according to one of the preceding claims, **characterised in that** endface projections (5) are formed by casting on the respective cast body (3).

7. Method of manufacturing a stator according to one of the preceding claims for an electric machine with a rotary internal rotor, the stator being housing-less with at least one electric armature core (1) with parallel sides (17) and having a plurality of cooling channels, which are embedded in a plurality of cast bodies (3), which are each formed in one piece by casting heat-conducting material, **characterised by** the following steps:
a) punching a plurality of insulated electric armature stampings (2) with the parallel sides (17) and recesses (4) for the formation of at most two receiving cavities for a respective cast body (3), in such a manner that the receiving cavities cover only part of a hypothetical circle extending around the internal rotor axis (19) and are disposed diametrically opposite to one another each in one of the parallel sides (17) of the armature core (1) with a substantial distance from one another in the direction of the circle;
b) layering of an armature core (1) from the mutually insulated stampings (2) with the formation of the two, maximum, receiving cavities via congruent superposition of the recesses (4);
c) insertion of the armature core (1) in a casting mould;
d) positioning of a respective prefabricated, winding, serpentine cooling pipe (6) in the two, maximum, receiving cavities in such a manner that only the cooling pipe ends (9) of the serpentine cooling pipe (6) project from the stator;
d) casting of the armature core (1) with the positioned serpentine cooling pipes (6) from a casting compound of heat-conducting material, in such a manner that the serpentine cooling pipes (6) are embedded as cooling channels, and only the cooling pipe ends (9) of the serpentine cooling pipes (6) project from the stator; and
f) cooling of the composite consisting of the cooling pipe(s) and the casting compound, with the formation of the cast body or bodies (3) in the receiving cavity or cavities.

8. Method according to claim 7, **characterised in that** step d) is carried out before step c).

## Revendications

1. Stator refroidi pour une machine électrique comprenant un induit intérieur rotatif, lequel stator est formé sans boîtier avec au moins un empilage de tôles électriques (1) ayant des côtés parallèles (17) et présente plusieurs conduits de refroidissement qui sont noyés dans plusieurs corps moulés (3) chacun monobloc formés par coulée de matériau conducteur de chaleur, qui s'appliquent chacun sur l'empilage de tôles (1), et sont reçus dans un espace creux (4) de l'empilage (1) et traversent l'intérieur de celui-ci, et ne couvrent qu'une partie d'une circonférence imaginaire s'étendant autour de l'axe (19) de l'induit intérieur, **caractérisé en ce que** deux corps moulés (3) sont prévus au maximum, qui sont disposés chacun dans l'un de deux côtés parallèles (17) au maximum de l'empilage de tôles (1), et que les deux corps moulés (3) au maximum sont diamétralement opposés par rapport à l'axe (19) de l'induit intérieur et disposés à une distance mutuelle substantielle dans la direction de la circonférence, et qu'un serpentin de refroidissement (6) préfabriqué, s'étendant en forme de méandre avec des sections juxtaposées, est noyé en tant que conduit de refroidissement dans chaque corps moulé (3), seules les extrémités (9) des serpentins de refroidissement (6) dépassant du stator.

2. Stator suivant la revendication 1, **caractérisé en ce que** le corps moulé (3, 3a) est coulé en aluminium ou en zinc ou en un alliage contenant de l'aluminium et/ou du zinc.

3. Stator suivant l'une des revendications 1 et 2, **caractérisé en ce qu'**il est formé sans boîtier à partir de l'empilage de tôles (1) ayant une section transversale de base rectangulaire ou carrée.

4. Stator suivant l'une des revendications précédentes, **caractérisé en ce que** le serpentin de refroidissement (6) s'étend dans le corps moulé (3, 3a), axialement parallèlement à l'axe (19) de l'induit intérieur, dans un plan imaginaire (18) ou dans une section de surface cintrée imaginaire.

5. Stator suivant l'une des revendications précédentes, **caractérisé en ce que** le corps moulé (3) présente en section transversale un profil de contour ayant une courbure concave sur le côté (7) en vis-à-vis de l'axe (19) de l'induit intérieur.

6. Stator suivant l'une des revendications précédentes, **caractérisé en ce que** des saillies frontales (5) sont conformées par coulée sur chaque corps moulé (3).

7. Procédé de fabrication d'un stator suivant l'une des revendications précédentes pour une machine électrique comprenant un induit intérieur rotatif, lequel stator est formé sans boîtier avec au moins un empilage de tôles électriques (1) ayant des côtés parallèles et est muni de plusieurs conduits de refroidissement, qui sont noyés dans plusieurs corps moulés chacun monobloc formés par coulée de matériau conducteur de chaleur, **caractérisé par** les phases suivantes :
a) découpage d'une multiplicité de lamelles de tôles électriques (2) isolées ayant les côtés parallèles (17) et des évidements (4) pour la formation d'au maximum deux espaces creux de réception chacun pour un corps moulé (3), de telle sorte que les espaces creux de réception ne couvrent qu'une partie d'une circonférence imaginaire s'étendant autour de l'axe (19) de l'induit intérieur et sont disposés diamétralement en vis-à-vis l'un de l'autre chacun dans l'un des côtés parallèles (17) de l'empilage de tôles (1) à une distance mutuelle substantielle dans la direction de la circonférence ;
b) empilage d'un paquet de tôles (1) formé à partir des lamelles (2) isolées les unes par rapport aux autres, avec formation des deux espaces creux de réception au maximum par superposition coïncidente des évidements (4) ;
c) insertion de l'empilage de tôles (1) dans un moule ;
d) positionnement d'un serpentin de refroidissement (6) préfabriqué en forme de méandre dans chacun des deux espaces creux de réception au maximum de telle sorte que seules les extrémités (9) des serpentins de refroidissement (6) dépassent du stator ;
e) enrobage de l'empilage de tôles (1) avec les serpentins de refroidissement (6) positionnés au moyen d'une masse de moulage en matériau conducteur de chaleur de telle sorte que les serpentins de refroidissement (6) sont noyés en tant que conduits de refroidissement, et que seules les extrémités (9) des serpentins de refroidissement (6) dépassent du stator ;
f) refroidissement du complexe formé du ou des tubes de refroidissement (6) et de la masse de moulage avec formation du ou des corps moulés (3) dans le ou les espaces creux de réception.

8. Procédé suivant la revendication 7, **caractérisé en ce que** la phase d) est mise en oeuvre avant la phase c).
